# EUROPEAN PATENT APPLICATION

(11) **EP 1 884 160 A1**
(43) Date of publication of application: **06.02.2008**
(21) Application number: 06015571.0
(22) Date of filing: 26.07.2006
(51) Int. Cl.: A01N 63/04, A01N 25/04, A01P 7/02

(54) **Biopesticide compositions comprising fungal spores pathogenic for ticks, tween, and paraffin oil**

(71) Applicant: Bozsik, Béla Pal, 1119 Budapest (HU); Bratek, Zoltan, 1147 Budapest (HU); Tar, Jeno, 2030 Erd (HU)
(72) Inventor: Bozsik, Béla Pal, 1119 Budapest (HU); Bratek, Zoltan, 1147 Budapest (HU)
(74) Representative: Derzsi, Katalin

(57) **Abstract**

The invention relates to biopesticide preparations, method for the preparation of the active ingredients, and application of the biopesticides to kill (thin) ticks.

According to the invention the preparation contains fermentation medium containing 10⁸-10⁹ fungal spores/ml specifically pathogenic for ticks, and 10-20 w% Tween detergent-paraffin oil mixture, calculated to the mass of the preparation, and the rest is solid or liquid carrier, and optionally other usual ingredient and/or excipient, known per se.

In addition, the invention relates to the peparation of the fermentation medium containing the fungi used as biopesticides, and the use of the biopesticides.

## Description

The invention relates to biopesticide preparations, method for the preparation of the active ingredients, and application of the biopesticides to kill (thin) ticks.

As it is well known, ticks are parasitic, blood-sucking mites, with large body, showing mostly sexual dimorphism. 18 species of them are so-called euryxen species, which can be dangerous both for humans and domestic animals, while the others are the so-called stenoxen species, the life stages of which feed strictly on certain wild animals. The ticks are the first among the vectors of disease causing agents. The pathogens can proliferate in their digestive canal and organs, while the eggs laid from the infected ovary transmit the pathogen concerned to the growth stages (larva, nymph and adult) of the offspring generation, and this way the disease is spread not just horizontally, but even vertically.

It is very difficult to get protection against them, because they have a hiding lifestyle, they can withstand fasting even for more than one year, although they are sensitive to contact poisons. But the chemical prevention may cause unpredictable damages in an ecosystem, and it is not rare, that these emerge only after years or decades.

It is also known, that the most frequent diseases of the insects are caused by viruses and fungi, therefore the use of viruses and fungi making them sick is a possible way of protection against them. Even in case of the ticks theoretically one way leading to targeted protection would be the search for the parasite microorganisms of them, investigation of their pathogenicity, and their controlled application.

Because of the problems concerning the artificial multiplication of viruses, the use of fungi as biopesticides is spread, and the insecticides based on entomopathogenic fungi are continuously gaining commercial significance.

In the nature, significant decrease in the size of the insect populations is caused by fungal epidemics sweeping over in the wet and chilly periods. The insect doesn't have to consume the entomopathogenic fungi, because the infection occurs through the cuticle of the outer shell. The fungal spores germinate on the cuticle of the insects, they penetrate by enzymatically decomposing the cuticle, and switch life stage in the haemolymph, proliferate very fast by budding in the following period, and cause simultaneously the general mycosis developing in the internal organs, which is shortly followed by the death of the insect, partly due to the toxins produced by the fungus.

Insects do not have immune system, therefore resistance against the entomopathogenic fungi cannot occur.

But the technical literature about the ticks is very sparse, their diseases were not studied, investigated.

Purpose of the invention is to find solution for thinning the ticks with biopesticides, namely with fungal infection.

According to the invention, it was discovered that in the previous experiments only generic fungi were used as pesticides, which are generally entomopathogenic, but their efficacy is not satisfactory against ticks. In our research it was discovered, that many fungus-taxon appears on the ticks, which do not feed on other insects. Tick-pathogenicity of the isolated fungi was tested by *in vitro* infecting ticks collected from multiple areas, confirming our hypothesis.

Surprisingly it was found, that this way very high pathogenicity can be achieved.

Pure cultures of the fungal strains proven to be pathogenic were deposited in our strain collection. As it was mentioned above, we reached the following conclusion: our goals may only be realized, if we collect and systematize the entomopathogenic fungi occurring on the ticks and test their pathogenicity, then culture them in suitable conditions, and use them suitably formulated in a tick-specific biopesticide/mycoinsecticide field application as biopesticides.

Therefore the object of the invention was to culture and use specifically tick-pathogenic fungi in preparations against ticks. The harmlessness of the strains was tested on other insects before the field applications. Only those were used, which were proven to be ineffective in species used in the harmlessness tests.

The following classification was made on the basis of our experiments:
- obligate entomopathogens living on ticks (only these were tested for pathogenicity):
   Beauveria spp., Paecilomyces pp., Scopulariopsis brevicaulis
- facultative entomopathogens living on ticks:
   fusarium spp., etc.

It was established, that the following characteristics must be enhanced during cultivation and selection of the fungal species proven to be suitable: specificity, mortality rate, activity at low temperature, activity at wide humidity range, UV-resistance.

According to the invention the entomopathogenic fungi living on ticks are collected from the areas where we would like to thin the ticks - for example in Hungary, and in its regions having different microfauna - then they are systematized, propagated by cultivation, and applied rotationally for the different regions.

In our laboratory and field experiments it turned out, that the entomopathogenic fungi applied
1. kill the ticks by themselves
2. weaken them, and this way make the propagation of the other fungi present in the ticks possible which finally results in the death of the tick.

Back isolations confirm what was mentioned above: the entomopathogens back-isolated from single dead ticks might be different from the entomopathogenic fungi used in the experiment. By isolating and propagating these there is a chance for using entomopathogenic fungi especially effective for the tick population living on the area.

According to the invention the manipulations mentioned above are carried out in such a way, that in the course of the laboratory tests of the ticks collected after the control of the planned application area, strains growing from ticks weakened by under-dosed chemicals or entomopathogens are isolated, these are cultivated with a specific fermentation procedure, and then used in the treatment procedure.

The cultivation step according to the invention is carried out with a specific fermentation procedure and culture medium, which are different from the previous ones, or have not been used yet for the entomopathogenic fungi, but the procedure is known for the professionals.

### Composition of the medium:

Suitable for general application (i.e.: *Beauveria bassiana*):
glucose (40 g/dm³)
KNO₃ (6 g/dm³)
KH₂PO₄ (6 g/dm³)
MgSO₄ × 7 H₂O (2 g/dm³)
KCl (2 g/dm³).

Special demand of the *Paecilomyces* species that they can be cultivated only on peptone-containing medium, with eight-ten days' fermentation:
glucose (40 g)
peptone (10 g)
deionized water (1000 cm³)
agar (15 g)

Additional benefit of the solution according to the invention is that it solves the problem of the realization of the intermediary scale-up between the laboratory and pilot-plant application.

The entomopathogenic fungi need high humidity for proliferation, which is provided in the biotope of the ticks, because they choose the areas assuring 90% relative humidity for permanent dwelling place.

The water-based spray doesn't stick properly to the cuticle of the ticks. In case of propagules originating from solid phase this problem is solved by using paraffin oil and Tween detergent together. These - sometimes unexpectedly - help easy adhering of the entomopathogenic fungi by forming hydrophobic environment, and at the same time provide the humid environment for the proliferation of the entomopathogenic fungi. Therefore by formulating the biopesticide according to the invention these points mentioned above are kept in mind. Application of the ingredient mixture (mixed in 10-20%, calculated for the mass of the preparation) increased mortality. But in our experiments the detergent in itself mostly decreased mortality. As a result of the high number of parallels many results are confirmed by high significance level. The preparation according to the invention contains fermentation medium with 10⁸-10⁹ fungal spores/ml, which are specifically pathogenic for ticks, and 10-20 w% Tween detergent-paraffin oil 1:4 mixture, calculated to the mass of the preparation, and the rest is solid or liquid carrier, and optionally other usual ingredient and/or excipient, known per se.

Preferably the fungal species used is in freshly prepared, liquid medium; but we can use revitalized, incubated, liofilized entomopathogenic fungal species too.

The first date proposed for spraying the product is that week, when the local average temperature is around five degrees centigrade, because this is the beginning of the activity of the ticks. The main point of the treatment procedure of the invention is that 10⁹-10¹³ spores/hectare biopesticide active ingredient or a preparation containing it is sprayed on the area to be treated.

For the selection of the date it must be known, that the propagules start to germinate from 10 °C, but do not die below freezing point. According to our measurements satisfactory humidity was found for the life and germination of the propagules, even in open washland fields and in canicular days.

Hereunder the invention is described in more details for better understanding, but the scope of the invention is not limited to the detailed description.

### Isolation and cultivation of entomopathogenic fungi

The dead ticks are put to the Sabouraud medium without surface sterilisation. The fungi living in the thick cuticle could be isolated, this way we could isolate the yeast strains with strong fatty acid decomposing activity, living probably in the thick cuticle of the ticks. Most of the isolated not entomopathogenic fungal strains were also identified, if it was possible. The pathogenicity tests served as further source of the isolations, in which many entomopathogenic strains were isolated from the control organisms, or from the back-isolations. Isolations were always followed by purification of the strains with multiple re-inoculation, or finally the formation monospore cultures.

### The obligate entomopathogenic fungi isolated:

1. *Paecilomyces aff. farinosus* (27 isolations)
2. *Scopulariopsis brevicaulis* (13 isolations)
3. *Paecilomyces fumoso-roseus* (3 isolations)
4. *Beauveria spp.* (2 isolations)

Tick were collected in greater number from six regions: the neighbourhood of Budapest (Cinkota, Köbánya, Pestlörinc), the neighbourhood of Dunaszentgyörgy, the neighbourhood of Rugonfalva, the neighbourhood of Sükösd, the neighbourhood of Tata, the neighbourhood of Vecsés.

The presence of the *Paecilomyces aff. farinosus* species was detectable from six populations of the practically isolated tick populations of the 9 sampling area. Most of the populations are carriers of the entomopathogenic *Paecilomyces aff. farinosus* fungal species. 15 isolates of the *Paecilomyces aff. farinosus* originated from the back-inoculations of the experiments with different entomopathogenic fungi, and 12 originated from the untreated controls.

The *Scopulariopsis brevicaulis* species is considered to be a facultative entomopathogen in some publications. It caused mycoses in large number on the ticks originating from Sükösd. On the ticks of the other two populations it occurred only occasionally. The isolations of the *Paecilomyces fumoso-roseus* and *Beauveria* were only occasional successes, but despite of this the wider ranging occurrence of these species may not be excluded in the investigated or in the domestic tick populations.

Detailed investigations were carried out on the *Fusarium* strains isolated in significant number (Szécsi et al., 2000). The results of the species-level identification made by morphological characteristics and isoenzyme analysis of the 23 *Fusarium* strains originated from tick carcasses and tick eggnodes are: F. *acuminatum* (2 isolates), F. *equiseti* (5 isolates), F. *moniliforme* (6 isolates), F. *semitectum* (2 isolates), F. *sporotrichoides* (2 isolates), F. *solani* (7 isolates).

Pathogenicity of the Fusarium isolates was not tested.

Altogether 58 yeast strains could be isolated in the isolation and pathogenicity tests. In addition to the investigations necessary for the species-level classification the following parameters were determined: fatty acid decomposition, assimilation of N-acetyl-D-glucoasmine (NAG) and formation of hifa/pseudo hifa. It can be supposed, that the isolated yeast strains live, at least partly, in the cuticle of the tick, their role played in the pathogenicity processes must be confirmed in further investigations.

67 isolates of the 11 obligate or facultative entomopathogenic species described above (and the *Fusarium* strains still under identification) were isolated from 3000 tick carcasses, and this way we could prove, that the body of the insect and the eggs are the carriers of many different entomopathogenic fungal species in a given domestic tick-population. For the determination of the occurrence ratio relating to the entomopathogenic microorganisms naturally occurring in the populations microbiological, or rather DNA-based probes should be developed.

Maintenance of the isolated strains has been carried out on SNA medium poor in nutrients. Maintenance of the P. aff. *farinosus* strains can only be made reliable on the nutrient-rich Saburaud medium. With each isolate maintenance of the original and the monospore origin lines are carried out in parallel, because of the published inconsistent data about the relation of monospore origin and pathogenicity. Refreshing of the strains is made by back-isolations from ticks, although passageing on other - less seasonally available and less health risk carrying - insect species was also tried. Strains losing their pathogenicity are discarded.

### Molecular taxonomical investigation of the isolates

By using the sequencing method we could determine the sequence of the ITS region of the following tick-pathogenic fungal isolates:

| (species) | (ID) | (gene-bank number) |
|---|---|---|
| *Beuveria sp. (B. tenella)* | K C/3 Msp | AJ345086 |
| *Beuveria sp. (B. tenella)* | T142 Msp. | AJ345087 |
| *Beuveria sp. (B. tenella)* | 99/152 | AJ345088 |
| *Beuveria sp. (B.bassiana)* | PL 6111 | AJ345089 |
| *Beuveria sp. (B.bassiana)* | "Homoptera" | AJ345090 |
| *Paecilomyces fumosoroseus* | F00875 | AJ345091 |
| *Paecilomyces fumosoroseus* | 99/203 7/ 1 | AJ345092 |
| *Paecilomyces fumosoroseus* | X 47/3 Rf. 1/C | AJ345093 |
| *Conidiobolus coronatus* | P1 | AJ345094 |

On the basis of the sequences the five *Beauveria* strains can be divided into two groups: the last two members of the list above are clearly *B. bassiana* (99% identity with the *B. bassiana* sequences: AF291871 or AF 322930), but the first three strains are *B. tenella* with a higher probability.

### Laboratory testing of pathogenicity

Primary goal of the pathogenicity tests made in the laboratories was the confirmation of the pathogenicity of the collected isolates on ticks, the secondary goal was the determination of the level of pathogenicity. Due to the fact that the technical literature of the entomopathogenic fungi relating to ticks is very poor, even in case of the species known as obligate entomopathogens with wide insect host range, living worldwide (*Beauveria* spp., P. *fumoso-roseus,* P. *farinosus*), it was questionable, whether they can cause mycosis on ticks. In case of some species it was presumable that they are weak secondary entomopathogens (for example *Scopulariopsis brevicalis, Conidiobolus coronata*)*,* to prove this they were involved in the tests. The experiments were planned by preferring the strains isolated from insects, mainly from ticks, but it was an emphasized point, that testing of the species biologically better known, and used in the registered biopesticides (*Beauveria* spp., *Paecilomyces* spp.) should also be carried out. The *Paecilomyces* isolates which were easily back-isolatable and caused extensive mycoses, were also tested. From the formulation procedures, the oil-based formulation was selected for testing, which was realized by adding paraffin oil.

Tests were started in antiseptical conditions in Petri dishes, on polypropylene curtain material. After placing in the ticks they were closed by wrapping around with parafilm. High humidity was assured inside the dish. In the pilot experiments in this experimental system, 5-10% of the ticks were alive even for one year, but more than half of the ticks died within 2-3 months, that is why Days 11 and 24 were set for control.

### Summarizing evaluation of the entomopathogenic species used in the pathogenicity testing

### Beauveria bassiana:

Each of the four strains isolated from soil and frequently used in the pathogenicity tests significantly increased mortality in one of the 1-5 tests. The effect could be enhanced by formulation at each strain. According to literature data below 10 °C it can still grow and infect insects. Its toxins may cause deformations in cold-blood vertebrates, therefore the application of the products based on it must be avoided close to waters. Its application is also contraindicated in the neighbourhood of bee-keeping farms, because of the mycoses possibly caused on bees. No data are available for its health-damaging effect in warm-blooded vertebrates.

European registration of the biopesticides based on the species is under way, and the Naturalis-L preparation manufactured in Arizona has received provisional registration [Biocontrol News and Information (Febr. 18, 1997)]. In the US, two strains are registered by the Environmental Protection Agency (EPA 128818, EPA 128924). *Beauveria tenella:*

In pathogenicity test No. 5 2 strains were able to increase mortality significantly. It was isolated many times from ticks by Samsináková et al. (1974). Some people consider it the same as *Beauveria bassiana*. No investigations are known for its application as biopesticide.

### Paecilomyces aff. farinosus:

It was successful in pathogenicity test No.4 and in many other minor tests (not described here), the mortality caused by it can be enhanced by formulation. Significant portion of the domestic tick populations carries it. By increasing its pathogenicity, the strengthened natural enemy can be brought back to the tick population. It can be easily back-isolated from the developed surface mycoses. It is a widespread, varied species (Humber, 1998), and its variations could be detected in many insect species (Chew et al., 1988). According to literature data it can still grow and infect inspects below 10 °C. It occurs more frequently in forest soils, in cultivated lands it occurs only occasionally (Vänninen, 1995). Worldwide lack of registration and licensing precedents of the species make domestic registration more complicated. The close relative, the P. *tenuipes* living on Lepidoptera species is on the list of the microorganisms approved for biological prevention in the Walloon territory of Belgium.

### Paecilomyces fumoso-roseus:

In test No. 1 strain No. K45 increased mortality powerfully and significantly. Strain No. 99/203 was successful in pathogenicity test No. 5.

The species is spread worldwide, and can infect many insect species, it is frequently used as biopesticide (Cantone et al., 1998). In Germany and in Poland it was found even in cultivated lands, that is why its use may be recommended even in gardens, fruit-gardens, plantations, since the fungus spread can further persist in the soils (Vänninen, 1995). In liquid cultures it forms blastospores, which on the cuticle of the insects germinates much faster than the conidia. For its mass-production companies of solid capital cooperate (Biocontrol News and Information, Febr. 18, 1997). In the US one of its strains is registered by the Environmental Protection Agency (EPA 115002).

### Scopulariopsis brevicaulis:

Although in pathogenicity test No. 5 it increased mortality significantly, but because of its human health risk (Morton and Smith, 1963) its application as biopesticide is not recommended.

In one respect the strains of *Metarhizium anisopliae,* the worldwide spread entomopathogen fungal species were not isolated from the tick populations studied, in other respect it cannot even be used against the ticks preferring the humid, cool areas because of its thermofilicity, that is why it was not involved in the pathogenicity tests.

### Evaluation of the effects of formulation:

The use of paraffin oil synergically increased mortality at nearly all species. The beneficial effect of the oil-based formulation is based on the following changes: life-span of the propagules increases, their UV sensitivity decreases, their adhesion to the hydrophobic insect surface (the mortality is dose-dependent!) and to the plant cuticle is increasing, thus even rain can wash it away only to a smaller extent (Inyang et al., 1998, 2000). More important effect of addition of oils is that it increases germination of spores even at lower humidity, assuring initiation of the pathogenesis processes. Oils may dissolve certain stimulator factors from the cuticle of the insect (Ibrahim et al., 1999). Other ways of formulation after the submerged fermentation may also offer other advantages (Stephan and Zimmermann, 1998; Shah et al., 1999).

### Investigation of the harmlessness of the fungi

### Investigation of the entomopathogenic effect of Beauveria bassiana strains on Acyrthosiphon pisum harris pea aphid

Studies were carried out in greenhouse with *Acyrthosiphon pisum* pea aphid grown on broad-bean.

On the basis of the results of the treatments made with the fermentation medium of the strain B 58 and with its dilutions it can be said that in greenhouse the fermentation medium and its dilutions had no effect on the size of the pea aphid colonies, and in the greenhouse there was no entomopathogenic fungal infection in the pea aphid colonies treated with fermentation medium, not even on the fields, where the temperature was significantly lower.

The treatment with the fermentation medium of the entomopathogenic fungus had no effect even on the hoverfly larvae. 7 and 14 days after the treatment all hoverfly larvae were alive, and what is more, reached the No. 4 larva stage before the pupa state, but because of their feed the size of the pea aphid colonies decreased to a few aphids, or even to 0, both in the water treated control population and in the population treated with entomopathogenic fungi. On the basis of our results it can be said, that the applied entomopathogenic fungal isolates have no deleterious effect on the larvae of the hoverfly.

The isolates tested didn't thin the pea aphid neither at ambient temperature around 25 °C, with mean relative humidity around 60%, nor around 15 °C mean temperature, with mean relative humidity around 75%. In addition to this they didn't have any deleterious effect on the development of the hoverfly larvae. Those hoverfly larvae, which were put on the plants before the treatment, reached No. 4 larva stage before the pupa stage.

On the basis of these results in can reliably be stated, that the entomopathogenic fungi tested are not dangerous for the useful living organisms.

### Elaboration of the fermentation technology of the strains in pilot plant (100 dm³) experimental fermenters

### Submerged pilot plant fermentation

Microorganisms can grow even inside the media, and this creates the possibility of the large scale fermentation industry.

Fermentation of the entomopathogen microorganisms is carried out in multiple steps too. The microoganisms are normally maintained in test tube, on solid medium. The generally 100 ml liquid medium in Erlenmeyer flasks is inoculated with the test tube culture. Oxigen supply is provided by shaking on a shaking table. After the shaken culture has grown up suitably, several liters' medium in an aerated and stirred laboratory fermenter is inoculated with it. The next step is the cultivation of the inoculum culture in a fermenter, with which the main fermenter will be inoculated, using the culture grown in the previous step as inoculum. When the culture developed suitably in the inoculum fermenter, then the industrial scale fermenter is inoculated with it.

Optimal conditions of the submerged fungal fermentation have previously been worked out by carrying out factor-plan experiments (pH, media composition, C:N:P ratio, aeration, feeding, etc.). The next step is the realization of the results of the optimization in laboratory fermenters in pilot-plant scale, to establish industrial scale manufacturing. Two fermenters with 100 dm³ useful volume were available for the elaboration of the technology. Processing of the higher amount of biomass (down-stream processes) has also been a problem to be solved, of course.

In the course of this the optimal culturing conditions were used in a 100 dm³ pilot-plant fermenter as scale-up. The temperature was 28 °C, the agitation speed was 200 rpm, aeration was 1 l/min. Other parameters (pH, composition of the medium, etc.) were the same as the parameters found optimal during the laboratory experiments:
Growing curve of the fungal strains was also similar to that observed in the flask experiments. Fermentation time of the different strains was 6 days.

The medium composition found optimal in the laboratory was the following:
glucose (40 g/dm³)
KNO₃ (6 g/dm³)
KH₂PO₄ (6 g/dm³)
MgSO₄ × 7 H₂O (2 g/dm³)
KCl (2 g/dm³) .

During fermentation, a sample was taken from the fermentation medium every day. Growth of the fungi started earlier in the fermenter than in the shaken-flask experiments, and the increase of the cell-mass was also much more intensive. pH of the fermentation samples was measured. The values varied between 6,1 and 6,4. The pH of the medium was not changed, neutral medium was used at the starting point.

At the end of the fermentation spore-formation was microscopically studied, and spores were counted. On the microscopic picture the blastospores and the hifa filaments were clearly visible in 1000x magnification. The size of the spores was relatively uniform, and their number was high. In the course of the different multiplications the spore number was between 8×10⁷ and 1,5×10⁸ spore/cm³, with the use of a hemocytometer.

### Growth kinetics of multiplication of the fungi

Growth curve was determined on the basis of the analysis of the samples taken during fermentation. Results are summarized in the following table.

### Growth curve of the B. bassiana B58

| Day | Gross mass (g) | Tare (g) | Net mass (g) | Average (g) |
|---|---|---|---|---|
| 0 | 48,54 | 48,55 | 0,01 | 0,01 |
| 0 | 57,12 | 57,13 | 0,01 | |
| 0 | 56,04 | 56,04 | 0,01 | |
| 1 | 55,54 | 55,55 | 0,01 | 0,01 |
| 1 | 49,67 | 49,68 | 0,01 | |
| 1 | 55,24 | 55,25 | 0,01 | |
| 2 | 46,64 | 46,60 | 0,04 | 0,05 |
| 2 | 55,87 | 55,80 | 0,07 | |
| 2 | 54,81 | 54,77 | 0,04 | |
| 3 | 55,65 | 55,36 | 0,29 | 0,32 |
| 3 | 57,27 | 56,93 | 0,34 | |
| 3 | 57,34 | 57,00 | 0,34 | |
| 4 | 55,37 | 54,89 | 0,52 | 0,46 |
| 4 | 55,23 | 54,78 | 0,45 | |
| 4 | 56,33 | 55,92 | 0,41 | |
| 5 | 57,84 | 57,00 | 0,84 | 0,86 |
| 5 | 58,00 | 57,12 | 0,88 | |
| 5 | 56,33 | 55,92 | 0,86 | |
| 6 | 55,24 | 54,81 | 0,43 | 0,28 |
| 6 | 46,80 | 46,56 | 0,24 | |
| 6 | 55,94 | 55,76 | 0,18 | |

On the basis of the virulence and growth characteristics the suitable isolate is selected, and productibility must be emphasized.

Another possible method is the preparation of dry, dust form products. Such a procedure can be done when during the down-stream processes the biomass is separated by centrifugation or with filtration, and the wet biomass produced is mixed with the carrier substances, with the mixture of osmotically active and antioxidant substances. The paste prepared this way is dried at 4 °C in aerated drying box.

Several other effective methods are available for mild drying of the fungi, conserving their activity: in vacuum, with freezing, spray-drying, drying with inert substance, and in fluid bed with 40 °C input and 30 °C output temperature. The prepared powder-form product keeps its viability, applicability for a long time when stored at low temperature, in sterile conditions.

The fungal preparations can be used in their formulated form, or in their application form diluted from it, as in ready to use solutions, suspensions, powders, pastes, dissolvable powders, dusting preparations or in granules.

Filamentous fungi can be easily cultivated with solid phase fermentation, mainly on grains. We used wheat for this purpose. The filaments weave through even the inside of the grains, the bags whitened from the fungal culture. Large number of conidia were observable microscopically on the aerial mycelia.

The purpose of the invention was the optimization of the medium of the entomopathogenic fungi used for protection, and the development of manufacturing of the inoculum on pilot-plant scale.

Experiments were carried out by submerged and solid phase fermentation. Factor-plan was prepared for carrying out the submerged fermentation. On the basis of this, eight different medium-compositions were used in the submerged cultures. In the course of the fermentation cell growth was monitored and sugar consumption was measured. The medium providing the highest cell-mass growth was selected as a basis of the fermentation cultures. Fermentation cultivation was carried out on two levels (10 dm³ laboratory and 100 dm³ pilot-plant). At the end of fermentation the fermentation medium was investigated microscopically. Wheat-grain with CaCO₃ was selected as basis of the solid phase fermentation.

Submerged, pilot-plant fermentation technology was developed for many entomopathogenic fungi, this way of *Beauveria* and *Paecilomyces* strains were cultivated. During the submerged fermentations carried out on the basis of the factor-plan the B58 strain of *Beauveria bassiana* proved to be more productive. On level 8, where the concentration of the components of the medium was the highest, it gave 1,22 gram result. It seemed to us that from the components of the medium the fungal strains are more sensitive to the nitrate-concentration. At low nitrate-concentration cell growth is low, while the low phosphate concentration doesn't reduce growth to such extent. Quick cell-mass growth could be reached in the fermenter. The spore-number reached was 8×10⁷ - 1,5×10⁸ spores/cm³.

### Field experiments

### 1. Small land experiments

After preliminary tours of inspection concerning many spots, and planning, a grazing land on the fields of Dunaszentgyörgy was selected, which is a deeep-lying mesophillic field interspersed with willow-poplar groves. The number of ticks determined with "flagging" (see later) was the highest here (3-4 ticks /10 m).

Fermentation media of *Beauveria bassiana* (strain B57) and *Paecilomyces aff. farinosus* (strain PM2/S/3 msp.) species were used in the experiment, in which the number of blastospores was 5,8×10⁴ spores/ml for *Beauveria* bassiana, and 3,858×10⁶ spores/ml for *Paecilomyces aff. farinosus.* The fermentation medium was used in the following dilutions for both species:
1. 2,5 1+7,51 tap-water
2. 5,0 1 + 5,0 1 tap-water
3. 1,0 1 + 9,01 tap-water
4. 10,0 1 + 01 tap-water

Spraying was carried out with an engine-driven backpack sprayer providing strong pulverization by a disinfestation technician, on 10x10 m experimental lands. After spraying, ticks were collected from each experimental land, and by putting them into Petri-dishes the effects of the treatments were studied on them, just like in the pathogenicity tests. On Day 11 about 30% mortality was observed on the control and *Beauveria bassiana* treated ticks, while with the ticks treated with *Paecilomyces aff. farinosus* mortality rate was twice as high as this was observed, and what is more, at the Day 24 control about 20% body surface mycosis also occurred in the latter treatments.

As a new entomopathogenic fungus the K45 strain of *Paecilomyces fumoso-roseus* was involved in the experiment. Number of blastospores in the fermentation media was 6,8×10⁶ spores/ml for *Beauveria bassiana,* 3,858×10⁵ spores/ml for *Paecilomyces aff. farinosus,* and 7,1×10⁷ spores/ml for *Paecilomyces fumoso-roseus.* Spraying was carried out with a trailed sprayer (Gambetti GB-Export 2000 type, tank-size 2000 1, nozzles can be lifted until 160 cm, it can spray 18 m with its manually openable arms, size of the sprayed area is recorded instrumentally), before the middle of March.

### Size of the treated areas, and the number of spores sprayed:

| | | |
|---|---|---|
| *B. bassiana* | 1,0 hectare | 6,800×10¹¹ spores/hectare |
| *P. aff. farinosus* | 1,0 hectare | 3,858×10¹¹ spores/hectare |
| *P. fumoso-roseus* | 1,5 hectare | 4,733×10¹² spores/hectare |
| Control | 0,7 hectare | |

Mortality rates were around 50-78%, ratio of mycoses on the treated ticks (17-22%) was nearly twice as high as that of the control (12%). Efficacy of the product was proven with experiments carried out one year later: number of ticks was lower on all the three treated areas than on the control areas. With this treatment both *Paecilomyces* strains thinned the ticks equally effectively, the *Beauveria* bassiana strain was found to be less effective.

On each experimental land around Dunaszentgyörgy only the ticks belonging to the *Dermatocentor* genus were detectable. D. *pictus* occurred most frequently, the D. *marginatus* and the D. *reticulatus* species were represented only in a few percentage (<4%). The sexual distribution was 39% male and 61 % female ticks.

### 2. Investigations within the scope of field farming

The area was marked out on the basis of the many years' experience of official veterinary surgeon of Dunaszentgyörgy. Only the *Paecilomyces aff. farinosus* (PM2/S/2 Pete Msp.) was used, which was the most effective in the previous laboratory and field tests. Treated areas were on two sides of the control area:

| | | |
|---|---|---|
| *Paecilomyces aff. farinosus* | 4,7hectare | 702x 10¹³ spores/hectare |
| Actellic 50 EC | 3,4 hectare | 300 ml/6001 |

The *Paecilomyces aff. farinosus* fermentation medium contained submerged blastospores in an extremely high number: 0,4 * 10⁹/ml. Two hundred liters fermentation medium was diluted with 600 liters water. Treatment dose was 1,072 x 10¹³ spores/hectare, which equals to or slightly exceeds the propagule amounts recommended for field tests (Poprawski et al., 1999; Lacey et al., 1999; Legaspi et al., 2000). Spreading was carried out according to the previous study, but the arms holding the nozzles were totally open continuously, for 18 meters. Weather conditions were considered acceptable: 18,1 °C in shadow, 10,8-12,1 °C soil-temperature, humidity around 75% at grass level, sunny weather during the days before and after spraying, no wind. The ticks collected were placed under the sprayer in Petri-dishes to prove, that in the concentration sprayed the actellic 50EC efficiently killed the ticks. Additional controls were made in three later dates, on the ticks collected with flagging. Tests made on ticks kept in Petri-dishes showed nearly 90% mortality. Successful back-isolations were made from body surface mycoses. In the controls at scheduled for summertime ticks could not be collected even in the morning. Within a short time after the experiment ticks could not be detected on animals grazing on the treated area, on the grazing land considered to be rich in ticks, which shows the success of the treatments.

Most important benefits of the application of the entomopathogenic fungi are the following: environmental and ecological safety, there are no residual agents contaminating the environment; resistance is not developing in the insects; costs of development are relatively low; results of the research are available, because they are generated in the university-research institute circles, and not at private companies; costs of development and introduction of new chemical pesticides are constantly growing. Among the drawbacks efficiency is still to be mentioned first: biopesticides - contrary to the professional industrial formulation used at some products - contain living organisms, and this way they are much more sensitive to the environmental biotic and abiotic effects, mainly for the temperature, relative humidity or UV radiation, than the chemical active ingredients.

Mainly the *Beauveria* isolates were tested in the pathogenicity tests, because much more scientific knowledge is accumulated about the pathogenesis, toxin-production and application of *Beauveria bassiana,* and it is approved in many products in many countries of the world. Otherwise the isolates of the *Paecilomyces fumoso-roseus* and *Paecilomyces aff. farinosus* species caused a significant increase in the pathogenicity tests. Nearly at all fungal species and isoletes use of adjuvants proved to be effective regarding further increase of the mortality. The solid and shaken liquid culture media of isolates of the species mentioned above were optimized. Factor-plan based, and this way less time-consuming optimization of the submerged fermentation cultivation started from these results. The success of the following scale-up to pilot-plant level is proven by the fact, that at some strains 10⁹ spores/ml fermentation medium yield could also be reached.

The fungal spores prepared in submerged cultures, getting in contact with the surface of the insect can nearly immediately start growth, while in the differently formulated products spores need some days for swelling, germinating. This is the reason, that if there is a possibility to spray larger areas, direct application of the fermentation medium is recommended, even in case of protection against other insects. Success of the treatments was demonstrated by a direct method, with flagging, which assures collection of the ticks. Hiding lifestyle of the ticks, or the weather conditions which can influence it have an effect on the success of collecting, this is why they strongly complicate the use of the method. But half a year after the treatment, ticks were not found on animals kept on the grazing land, which proves the success of the treatment.

In the following an executive example is given, without limiting the scope of the invention to it.

### Example

### Application of a Paecilomyces aff. farinosus (PM2/S/3 pete Msp.) as biopesticide

Submerged fermentations were carried out in 100 dm³ pilot-plant bioreactors. The composition of the medium was as follows: glucose (40 g/dm³), KNO₃ (6 g/dm³), KH₂PO₄ (6 g/dm³), MgSO₄ x 7 H₂O (2 g/dm³), KCl (2 g/dm³).

At the beginning neutral medium was used, the pH was not changed even later, it was between 6,1 and 6,4. The temperature was 28 °C, the agitation speed was 200 rpm, the aeration was 1 1/min. Duration of the fermentation was 6 days.

At the end of the fermentation the fermentation medium was investigated microscopically. The number of the blastospores in the fermentation medium of *Paecilomyces aff. farinosus* was 0,4x 109/ml.

Two hundred liters fermentation medium was diluted with 600 liters water. The treated area was 4,7 hectare, the spore number sprayed was 1,702×10¹³ spores/hectare. Spraying: with trailed sprayer (Gambetti GB-Export 2000 type, tank-size 2000 1, nozzles can be lifted until 160 cm, it can spray 18 m with its manually operable arms, size of the sprayed area is recorded instrumentally), on March 10, with arms opened 18 m wide. Control - checking the results: in the former Danube flood area (mesophillic field of Dunaszentgyörgy) humidity is always high, the temperature is below 15-20 °C, and high number of ticks were found. Number of ticks collected with flagging was determined before treatment, and 1, 3, 12 months after treatment. Following the treatment, ticks could not be collected neither with flagging, nor from the grazing animals.

On the other side, the efficacy of the sprays was determined by spraying the collected ticks in Petri-dish with the spray from the sprayer: in case of *P. farinosus,* in this experiment it was ~90% mortality.

Even before the ticks die, they suffer damage by the activization of the endogenous fungi:
- the number of laid eggs decreases
- in our experiments carried out with biopesticides they were also interweaved by the entomopathogenic fungus

### Effect of the entomopathogenic fungi to the mortality

The adjuvants have mortality-increasing effect
- *Paecilomyces fumoso-roseus* 115-159%
- *Paecilomyces farinosus* 102-128%
- *Beauveria bassiana* 112-162%
- *Scopulariopsis brevicaulis* 117%
- Control 100%
Our statements are based on the evaluation of the effect of *in vitro* infection of ~20.000 ticks made on Days 11 and 24, and at the end of the experiment.
Statistically significant: t<5%.

### Effect of the entomopathogenic fungi to the mortality in laboratory model-experiments

- *Paecilomyces fumoso-roseus* 115-159%
- *Paecilomyces farinosus* 102-128%
- *Beauveria bassiana* 112-162%
- *Scopulariopsis brevicaulis* 117%
- Control 100%
Statistically significant: t<5% (or 10%).
The adjuvants have mortality-increasing effect.
Our statements are based on the evaluation of the effect of in vitro infection of ~20.000 ticks made on Days 11 and 24, and at the end of the experiment.

## Claims

1. Biopesticide preparation for thinning ticks, which contains fermentation medium with 10⁸-10⁹ fungal spores/ml specifically pathogenic for ticks, and 10-20 w% Tween detergent-paraffin oil mixture, calculated to the mass of the preparation, and the rest is solid or liquid carrier, and optionally other usual ingredient and/or excipient, known per se.

2. Preparation of Claim 1, wherein the active ingredient contains entomopathogenic fungal strains originating from general - country-wide - and local tick population, in a predetermined way simultaneously or mixed, according to the requirements of the field to be treated.

3. Preparation of Claim 1 or 2, wherein the ratio of the Tween detergent and the paraffin oil is 1:4.

4. Preparation of Claim 1, comprising freshly prepared fungal species, in liquid fermentation medium, if possible.

5. Preparation of Claim 1, comprising revitalized, or vitalized and incubated, liofilized entomopathogenic fungal species.

6. Method for the preparation of the fermentation medium containing the fungi applied as the active ingredient of the biopesticides of Claims 1-5, comprosing that fungal strains, growing from collected, suitably weakened ticks are isolated, these are multiplied with the method known as base-fermentation, and prepared them in a ready to use form.

7. Method according to Claim 5, wherein pepton-based media are used for fermentation.

8. Use of biopesticides for thinning ticks, wherein 10⁹-10¹³ spores/hectare biopesticide ingredient or preparation according to Claims 1-4 is sprayed to the field to be treated.
